# EUROPEAN PATENT SPECIFICATION

(11) **EP 4 286 116 B1**
(45) Date of publication and mention of the grant of the patent: **18.09.2024**
(21) Application number: 22176491.3
(22) Date of filing: 31.05.2022
(51) Int. Cl.: B26B 21/40

(54) **RAZOR CARTRIDGE COMPRISING BLADE PROTECTOR**
RASIERKLINGENEINHEIT MIT KLINGENSCHUTZ
CARTOUCHE DE RASOIR COMPORTANT UNE PROTECTION DE LAME

(43) Date of publication of application: 06.12.2023
(73) Proprietor: BIC Violex Single Member S.A., 145 69 Anoixi (GR)
(72) Inventor: Chrysanthakopoulos, Nikolaos, 14569 Anoixi (GR)
(74) Representative: Peterreins Schley

(56) References cited:
- EP-A1- 0 287 387
- WO-A1-2020/089058
- US-A1- 2020 319 087
- US-B1- 8 015 710

## Description

### Technical Field

The present invention relates to the field of razor cartridges comprising blade protectors. More specifically, the present invention relates to razor cartridges comprising hygromorphic layers acting as blade protectors.

### Background

Razor cartridges (also known as razor heads, safety razor heads or safety razor cartridges) are usually part of a shaving razor assembly that includes a razor handle. A razor cartridge typically comprises one or more cutting members, each including a shaving blade, and being arranged between a leading longitudinal side and a trailing longitudinal side of the razor head. In use, a user holds the razor handle in a shaving direction and brings the razor head into contact with a portion of skin. By movement of the razor head in a shaving direction, unwanted hair is removed.

WO-A1-2020/089058 discloses a shaving cartridge for a razor head, the shaving cartridge comprising:
a. one or more blades adapted to be secured within slots of a housing of the razor head, and
b. a core matrix partially encasing the blades, wherein the core matrix holds the blades together before use thereby forming the shaving cartridge that is configured to be removably incorporated in the housing of the razor head.

Between shaves, the shaving blades of the one or more cutting members may be left exposed. As a result, a user may come into contact with the shaving blades and injure himself. For example, a user may grab the razor cartridge and receive a cut to his hand. Additionally, the razor may be placed into baggage, e.g. when the user is travelling. The exposed shaving blades of the razor cartridge may damage other goods in the baggage, for example the toiletry bag its transported within. Furthermore, due to the contact with the user or with other objects, e.g. objects in the baggage, the shaving blades may be damaged. In particular, the edge of the shaving blade may be dulled which may result in reduced sharpness, leading to a reduced shaving efficiency or lead to damage to the user's skin. To counteract this problem, razor cartridges may be protected with a shaving blade protector. Typically, the shaving blade protector may be a polymer casing placed on the razor cartridge. However, the housing may be displaced or the user may be reluctant to remove and reattach during every shaving action. Furthermore, the polymer housing may be discarded by the user and thereby increase the problem of plastic pollution in the environment. 1

Therefore, there is a need in developing new efficient techniques capable of solving some or all of the above-mentioned problems.

### Summary

In a first aspect, the present disclosure relates to a razor cartridge comprising a housing having a leading longitudinal side and a trailing longitudinal side and one or more shaving blades disposed between the leading longitudinal side and a trailing longitudinal side. Further, the razor cartridge comprises a hygromorphic layer disposed between the leading longitudinal side and the trailing longitudinal side and adjacent to the one or more shaving blades.

In some embodiments, the hygromorphic layer may comprise a hygroexpansible material and a hygroinert material.

In some embodiments, the hygromorphic layer may comprise a hygroinert layer and a hygroexpansible layer, wherein the hygroinert layer comprises the hygroinert material and the hygroexpansible layer comprises the hygroexpansible material.

In some embodiments, the hygroexpansible material may be configured to swell and the hygroinert material may be configured not to swell.

In some embodiments, the hygroexpansible material may be hydrophilic and the hygroinert material may be hydrophobic.

In some embodiments, the one or more shaving blades may have a length, wherein the hygromorphic layer may cover at least part of the length, more specifically at least 80% of the length and in particular all of the length.

In some embodiments, the hygroinert material may comprise a toner ink, in particular a toner ink comprising an ester of an acrylic ester, iodine-doped reduced graphene oxide, polyimide, partially reduced graphene oxide-polypyrrole, graphite, biaxially oriented polypropylene, SU-8, NOA63, poly(methyl methacrylate) and/or a styrene-acrylate copolymer).

In some embodiments, the hygroexpansible material may comprise pollen paper, reduced graphene oxide, bacillus subtilis spores, CNT-paper, and/or polydopamine-reduced graphene oxide.

In some embodiments, the hygromorphic layer may comprise a plurality of fibers embedded within a polymeric matrix.

In some embodiments, the hygroinert layer may be patterned.

In some embodiments, as mentioned above, the hygroinert layer may comprise gaps and/or regions of variable thickness, in particular a plurality of gaps and/or regions of variable thickness.

In some embodiments, a distance between each of the plurality of gaps and/or regions of variable thickness may be between about 20 µm to about 1000 µm.

In some embodiments, each of the plurality of gaps and/or regions of variable thickness may have a width between about 20 µm to about 1000 µm.

In some embodiments, the hygromorphic layer may have a thickness between about 20 µm to about 400 µm.

In some embodiments, the hygromorphic layer may have a weight between about 10 mg to about 1000 mg.

In some embodiments, the hygromorphic layer may have a deformability between about 0.02 /cm*%-relative air humidity to about 0.25 /cm*%-relative air humidity.

In some embodiments, the hygromorphic layer may exhibit an increase of the maximum bending curvature of between about 1.00 cm⁻¹ to about 5.0 cm⁻¹, more specifically of between about 2.0 cm⁻¹ to about 4.0 cm⁻¹, and in particular of between about 1.5 cm⁻¹ to about 3.5 cm⁻¹, when a water content within the hygroexpansible material is increased from about 20 wt.-% to about 100 wt.-%.

In some embodiments, the hygromorphic layer may exhibit an increase of the maximum bending curvature from about 0.10 cm⁻¹ to about 3.1 cm⁻¹ when a water content within the hygroexpansible material may be increased from about 20 wt.-% to about 100 wt.-%.

In some embodiments, the razor cartridge may comprise a housing, wherein the housing may comprise a leading longitudinal side and/or a trailing longitudinal side. The housing may also comprise a first side portion and/or a second side portion, as well as a first retainer, and/or a second retainer.

In some embodiments, the hygromorphic layer may be attached to the housing, more specifically wherein a first hygromorphic layer may be attached to the first side portion or first retainer and a second hygromorphic layer may be attached to the second side portion or second retainer.

In some embodiments, the hygromorphic layer may be attached to the housing by an adhesive.

In some embodiments, the hygromorphic layer may comprise at least one protrusion, more specifically between about 2 to about 8 protrusions.

In some embodiments, the one or more protrusions may comprise the hygroexpansible and/or hygroinert material; or wherein the one or more protrusions may comprise a second material, more specifically a polymer and in particular silicone.

In some embodiments, the one or more protrusions may have a height between about 50 to about 500 µm and/or a width between about 20 µm to about 100 µm.

In some embodiments, the one or more protrusions may be straight, curved or angled.

In some embodiments, the hygromorphic layer may comprise a first side facing towards the one or more shaving blades and a second side facing away from the one or more shaving blades, wherein the one or more protrusions may be located on the first side.

In some embodiments, the one or more protrusions may be configured to be in contact with the leading longitudinal side and/or trailing longitudinal side, when the water content of the hygroexpansible material may be below a threshold water content and not to be in contact with the leading longitudinal side and/or trailing longitudinal side, when the water content may be above the threshold water content.

The razor cartridge according to any preceding claim, wherein the hygromorphic layer may be attached to the one or more shaving blades, more specifically wherein one hygromorphic layer may be attached to each shaving blade of the one or more shaving blades, in particular wherein each hygromorphic layer may be attached to each shaving blade by an adhesive.

In some embodiments, the one or more protrusion may be configured to be in contact with an angled portion of the shaving blade, when the water content of the hygroexpansible material is below the threshold water content and not to be in contact with the angled portion of the shaving blade, when the water content is above the threshold water content.

In some embodiments, the threshold water content may be about 50 wt.-%, more specifically about 30 wt.-% and in particular about 20 wt.-%.

In some embodiments, the threshold water content may be at least about 250 wt.-%, more specifically at least about 30 wt.-% and in particular at least about 520 wt.-%, relative to the total weight of the hygroexpansible material.

In a second aspect, the present disclosure relates to a method for manufacturing a razor cartridge according to any preceding embodiment, wherein the method comprises providing a razor cartridge blank, in particular a razor cartridge blank comprising one or more shaving blades. The method further comprises attaching the hygromorphic layer to a razor cartridge housing comprised within the razor cartridge blank or attaching the hygromorphic layer to one or more shaving blades comprised within the razor cartridge blank.

In a third aspect, the present disclosure relates to a shaving razor assembly comprising a razor handle and a razor cartridge according to any preceding embodiment, wherein the razor cartridge may be either releasably attached to the razor handle via a pivotable or non-pivotable connection, integrally formed with the razor handle via a non-pivotable connection, or integrally formed with the razor handle via a pivotable connection.

In a fourth aspect, which is not part of the claimed invention, the present May 31, 2022 disclosure relates to a kit of parts comprising a razor handle and a razor cartridge holder comprising a plurality of razor cartridges according to any preceding embodiment.

### Brief Description of the Drawings

Other characteristics will be apparent from the accompanying drawings, which form a part of this disclosure. The drawings are intended to further explain the present disclosure and to enable a person skilled in the art to practice it. However, the drawings are intended as non-limiting examples. Common reference numerals on different Figures indicate like or similar features.
**Figure 1** shows a razor assembly.
**Figure 2** shows a partially exploded view razor cartridge according to an aspect.
**Figure 3A** shows a hygromorphic layer in the dry state.
**Figure 3B** shows a hygromorphic layer in the wet state.
**Figure 4** shows a razor cartridge according to an aspect with a hygromorphic layer in the dry state.
**Figure 5** shows a razor cartridge according to an aspect with a hygromorphic layer in the wet state.
**Figure 6** shows a shaving blade according to an aspect with a hygromorphic layer in the dry state.
**Figure 7** shows a shaving blade according to an aspect with a hygromorphic layer in the wet state.

### Detailed Description

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

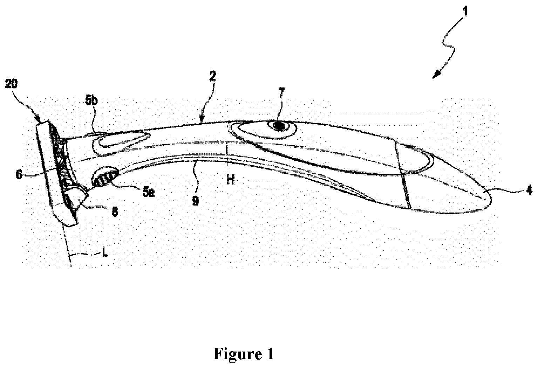

**Figure 1** is a perspective view of a shaving razor assembly 1 according to an aspect. The shaving razor assembly comprises shaving blades which are not driven by a motor. The shaving razor assembly 1 comprises a handle 2 extending in a handle direction H between a proximal portion 4 and a distal portion 6 of the handle 2. A razor cartridge 20 is mounted at the distal portion 6 of the handle 2. The razor cartridge 20 will be presented in more detail following discussion of the shaving razor assembly 1.

The mounting of the razor cartridge 20 to the distal portion 6 of the handle 2 may be via a pivotable bearing member enabling a frame of reference of the handle 2 to vary relative to a frame of reference of the razor cartridge 20, to thus enable the angle of the razor cartridge against the skin of a user to vary and adapt to changes during use.

In particular, the razor cartridge 20 pivots relative to the handle 2 about the longitudinal axis L of the razor cartridge 20, in use. The pivoting enables the user to adapt to contours of the body, for example. The longitudinal axis L of the razor cartridge 20 is substantially perpendicular to the shaving direction along the handle 2. Another example of a connection mechanism for connecting the razor cartridge 20 to the handle 2 is discussed in WO2006/027018 A1. Another alternative is a razor cartridge 20 that may pivot relative to a second pivot axis (a rocking axis), substantially perpendicular to axis L. In examples, the pivotable bearing member may be omitted and the handle 2 provided as an integrally connected part of the support of the razor cartridge 20. In an example, the pivotable bearing member may further comprise, or be replaced by, a release mechanism 5a, 5b, enabling rapid release of an exhausted razor cartridge from the handle 2.

In an example, the handle 2 and the support of the razor cartridge 20 are integrally formed with a pivotable bearing member (not illustrated) such as a plastic spring member.

In an example, the handle 2 is provided with a handle grip 9 formed of a rubber, or rubber-like material to improve gripping friction. In an example, the handle is provided with a thumb-rest 7 to enable a more secure grip of the handle 2 by a user.

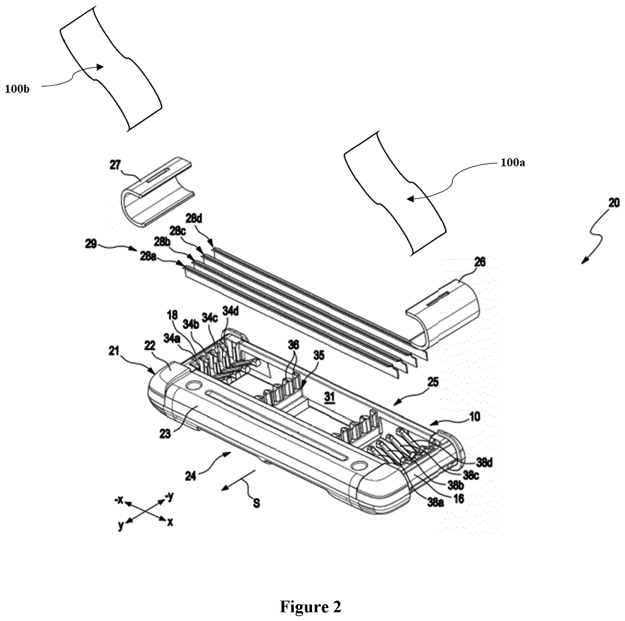

**Figure 2** is a perspective partial exploded view of a razor cartridge 20 according to an aspect. "Partial exploded view" means that some minor components of the razor cartridge 20 have been omitted from the exploded view to aid clarity of the drawing.

The shaving direction S is depicted in **Figure 2** using arrow S. In use, the razor cartridge 20 contacts a shaving plane SH (not shown in **Figure 2**), and is translated across the shaving plane SH in the direction of arrow S.

A housing 21 may be fabricated partially or completely of synthetic materials, such as plastic, resin, or elastomers. The housing 21 comprises a platform member 22 connectable to a handle 2 of a shaving razor assembly 1 either integrally, or by a connection mechanism such as a pivotable bearing member or by an interconnecting member.

A guard member 23 is provided as a substantially longitudinal edge of the razor cartridge 20. In use, the guard member 23 is the first portion of the razor cartridge 20 to contact uncut hairs, and it is thus located at a leading longitudinal side 24 of the razor cartridge 20. The side of the razor cartridge 20 opposite to the leading longitudinal side of the razor cartridge 20 and opposite to the shaving direction is the trailing longitudinal side 25 of the razor cartridge 20. The trailing longitudinal side 25 is thus the final portion of the razor cartridge 20 to contact the shaving plane SH, in use.

It will be noted that the terms "leading longitudinal side 24" and "trailing longitudinal side 25" are used to denote specific locations on the razor cartridge 20, and do not imply or require the absence or presence of a particular feature. For example, a guard member 23 may in one example be located at the "leading longitudinal side 24", and in another example a trimming blade (not shown in **Figure 2**) may be located at the "trailing longitudinal side 25" in another example, but it is not essential that these locations comprise such features.

The guard member 23, in an example, comprises an elastomeric member (not shown in **Figure 2**). In an example, the elastomeric layer comprises one or more fins extending longitudinally in parallel to the guard member 23 and substantially perpendicularly to the shaving direction. One purpose of such an elastomeric layer is, for example, to tension the skin prior to cutting.

The razor cartridge 20 may, in embodiments, further comprise a cap member at, or near to, the trailing longitudinal side 25 but this is not illustrated in the embodiment of **Figure 2** as an aid to clarity.

The razor cartridge 20 further comprises a group of cutting members 29 accommodated in a shaving blade receiving section 31 of the housing 21. The group of cutting members 29 comprises a plurality of cutting members 28a-d. The group of cutting members 29 is disposed in the housing 21 longitudinally and parallel to the shaving direction S such that in use, shaving blades of the cutting members 28a-d contact a shaving plane SH and cut hair present on the shaving plane SH as the razor cartridge 20 is moved across the shaving plane SH in the shaving direction S. The particular design of the group cutting members 29 will be discussed in detail subsequently.

In an example, a razor cartridge is provided with one cutting member. In an example, the razor a razor cartridge is provided with three cutting members. In an example, a razor cartridge is provided with four cutting members. In an example, a razor cartridge is provided with five cutting members. In an example, a razor cartridge is provided with six cutting members. In an example, a razor cartridge is provided with seven or more cutting members.

The housing 21 further comprises first retainer 26 and second retainer 27 configured to hold the shaving blades within razor cartridge 20 housing. The housing 21 further comprises first 16 and second 18 side portions. When the razor cartridge 20 is in an assembled state, the first and second side portions 16, 18 are configured to fixedly confine the longitudinal ends of the guard member 23, a cap member (if present, not shown in **Figure 2**) and the group of cutting members 29. The first retainer 26 and second retainer 27 may comprise, for example, plastic, an elastomer, or a metal material and furthermore may be of a different shape to that illustrated.

Although not illustrated, a pivotable bearing member may, in an example be provided on the side of the razor cartridge 20 configured to connect to a pivotable handle 2. Such a pivotable bearing member, in an example, comprises two or more shell bearings configured to connect to the pivotable bearing member of the handle 2.

A razor cartridge 20 as described above may have exposed shaving blades in between shaves. As a result, a user may come into contact with the shaving blades and injure himself. For example, a user may grab the razor cartridge and receive a cut to his hand. Additionally, the razor may be placed into baggage, e.g. when the user is travelling. The exposed shaving blades of the razor cartridge may damage other goods in the baggage, for example the toiletry bag its transported within. Furthermore, due to the contact with the user or with other objects, e.g. objects in the baggage, the shaving blades may be damaged. In particular, the edge of the shaving blade may be dulled which may result in reduced sharpness, leading to a reduced shaving efficiency or lead to damage to the user's skin.

Accordingly, in a first aspect, the present disclosure relates to a razor cartridge 20 comprising a housing 21 having a leading longitudinal side 24 and a trailing longitudinal side 25 and one or more shaving blades disposed between the leading longitudinal side 24 and the trailing longitudinal side 25. Further, the razor cartridge 20 comprises a hygromorphic layer 100 disposed between the leading longitudinal side 24 and the trailing longitudinal side 25 and adjacent to the one or more shaving blades.

The term "hygromorphic layer" within this disclosure may refer to a layer configured to change its geometry based on a water content within the hygromorphic layer. Additionally or alternatively, the term "hygromorphic layer" may refer to a layer configured to change its geometry based on a relative humidity in ambient air. Additionally or alternatively, the term "hygromorphic layer" may refer to a layer configured to change its curvature based on the water content within the hygromorphic layer or parts thereof and/or the relative humidity in ambient air. The change in geometry and/or curvature due to a change in water content in the hygromorphic layer and/or relative humidity in ambient air, may also be referred as hygromorphic action.

The term "adjacent to the one or more shaving blades" may refer to the "hygromorphic layer" or parts thereof being in contact with the one or more shaving blades. Additionally or alternatively, the term "adjacent to the one or more shaving blades" may refer to the "hygromorphic layer" or parts thereof being in contact with the one or more shaving blades at or below a specific water content in the hygromorphic layer and/or relative humidity in ambient air. Additionally or alternatively, the term "adjacent to the one or more shaving blades" may refer to the "hygromorphic layer" or parts thereof being disposed in a direction perpendicular to the shaving direction S relative to the one or more shaving blades. Additionally or alternatively, the term "adjacent to one or more shaving blades" may refer to the hygromorphic layer or parts thereof abutting, being in contact with and/or overlapping with the shaving plane SH, at or below a specific water content in the hygromorphic layer and/or relative humidity in ambient air. Additionally or alternatively, the term "adjacent to one or more shaving blades" may refer to hygromorphic layer being disposed, such that the shaving plane SH is disposed between the hygromorphic layer or parts thereof and the shaving blade receiving section, at or below a specific water content in the hygromorphic layer and/or relative humidity in ambient air. Additionally or alternatively, the term "adjacent to the one or more shaving blades" may refer to the "hygromorphic layer" or parts thereof being aligned with one or more shaving blades along the shaving direction. Additionally or alternatively, the term "adjacent to the one or more shaving blades" may refer to the "hygromorphic layer" or parts thereof being attached to the one or more shaving blades.

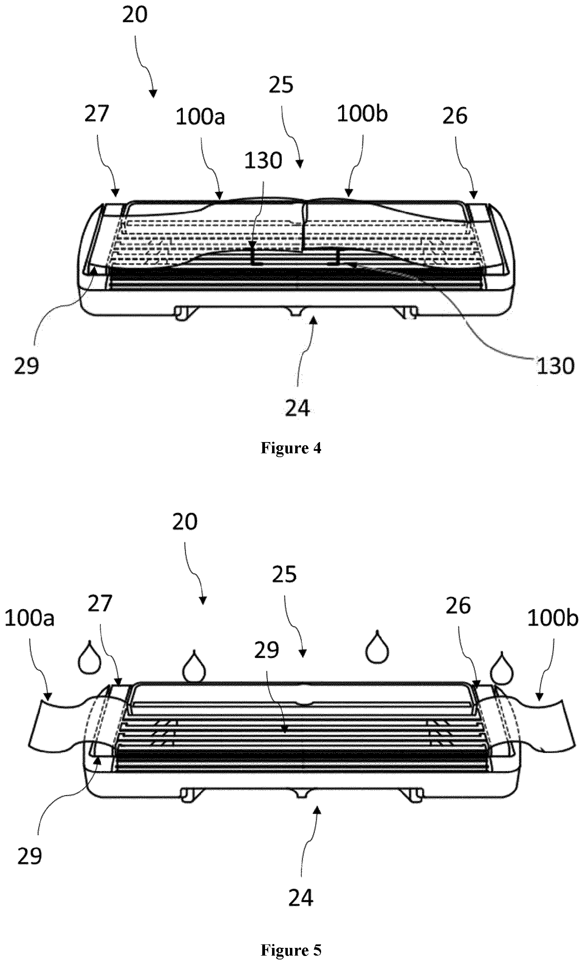

**Figure 4** and **Figure 5** show two hygromorphic layers 100a, 100b disposed opposite one another. **Figure 4** shows the hygromorphic layer 100 when in a dry state and **Figure 5** shows the hygromorphic layer in a wet state. The terms "dry state" and "wet state" are relative to one another, in particular the hygromorphic layer 100a, 100b may comprise more water relative to its total weight in the wet state, compared to its dry state. When the hygromorphic layer 100a, 100b is dry, as shown in **Figure 4****,** the hygromorphic layer 100a, 100b may cover the cutting members 29 and/or shaving blades. As a result, the hygromorphic layer 100a, 100b may protect the shaving blades from being damaged when not in use by preventing contact to other objects. Further, the hygromorphic layer 100a, 100b may protect the shaving blades from accidentally making contact with the user's hands and may therefore protect the user from injury. **Figure 5** shows the hygromorphic layer 100a, 100b when in the wet state, wherein the hygromorphic layer 100a, 100b does not cover the one or more shaving blades, allowing the user to perform the shaving action. In the wet state, the hygromorphic layer 100a, 100b may provide additional functions. For example, in the wet state the hygromorphic layer 100a, 100b may increase the contact area between the razor cartridge and the user's skin, which may reduce the pressure applied to the skin during the shaving action, which may reduce the risk of accidental cuts to the user's skin. Further, the hygromorphic layer 100a, 100b may comprise skin active ingredients. For example, hygromorphic layer 100a, 100b may comprise lubricants to improve the glide of the razor cartridge 20. Additionally or alternatively, the hygromorphic layer 100a, 100b may comprise astringents, to reduce the risk of razor burn. Additionally or alternatively, the hygromorphic layer 100a, 100b may comprise skin care substances, such as moisturizers. In some embodiments, the hygromorphic layer 100a, 100b may deform away from the shaving plane SH, such that less than 50%, more specifically less than 30% and in particular less than 15 % of the hygromorphic layer come into contact with a user's skin during the shaving action.

In some embodiments, the hygromorphic layer 100a, 100b may be attached to the housing 21, more specifically wherein a first hygromorphic layer 100a, 100b may be attached to the first side portion 16 or first retainer 26 and a second hygromorphic layer may be attached to the second side portion 18 or second retainer 27.

In some embodiments, the hygromorphic layer may be attached to the housing by an adhesive.

It should be noted, that as also depicted in **Figures 4 and 5****,** the hygromorphic layer 100a, 100b may only be partly attached to the razor cartridge, to allow for the hygromorphic action to occur. In particular, the hygromorphic layer 100a, 100b may comprise a free end. The term "free end" may refer to a structure not specifically secured in a way that will effectively prevent its translation. Additionally or alternatively, the term "free end" may refer to a structure which may rotate and/or bend, in particular without a second structure being forced to rotate and/or bend with the structure. Additionally or alternatively, the term "free end" may refer to a structure configured to rotate when torque is applied, to bend when a lateral force is applied but not to translate a normal force pulling the "free end" away from the attachment area is applied. Additionally or alternatively, the term "free end" may refer to a structure configured to transfer torque, lateral forces and/or normal forces only in the attachment area.

In some embodiments, the hygromorphic layer may comprise a hygroexpansible material 110 and a hygroinert material. The hygroexpansible material may be configured to swell and the hygroinert material may be configured not to swell. The swelling of the hygroexpansible material may lead to the dimensions of the hygroexpansible material swelling, while the hygroinert material retains its dimensions. The hygroexpansible material, while the hygroinert material retains its dimensions may result in the hygromorphic effect of the hygromorphic layer.

The term "hygroexpansible material" within this disclosure may refer to a material configured to absorb water and/or to increase its volume when absorbing water. Additionally or alternatively, the term "hygroexpansible material" within this disclosure may refer to a material configured to absorb up to at least 10 wt.-%, more specifically up to at least 30 wt.-% and in particular up to at least 70 wt.-% water, relative to the total weight of the hygroexpansible material including the water and to increase its volume when absorbing water by at least 0.1 % per 1 wt.-% water.

The term "hygroinert material" within this disclosure may refer to a material configured to not absorb water. Additionally or alternatively, the term "hygroinert material" may refer to a material configured to absorb less than 5% wt.-%, more specifically less than 1 wt.-% and in particular less than 0.1 wt.-% water. Additionally or alternatively, the term "hygroinert material" may refer to a material configured to prevent water from passing therethrough.

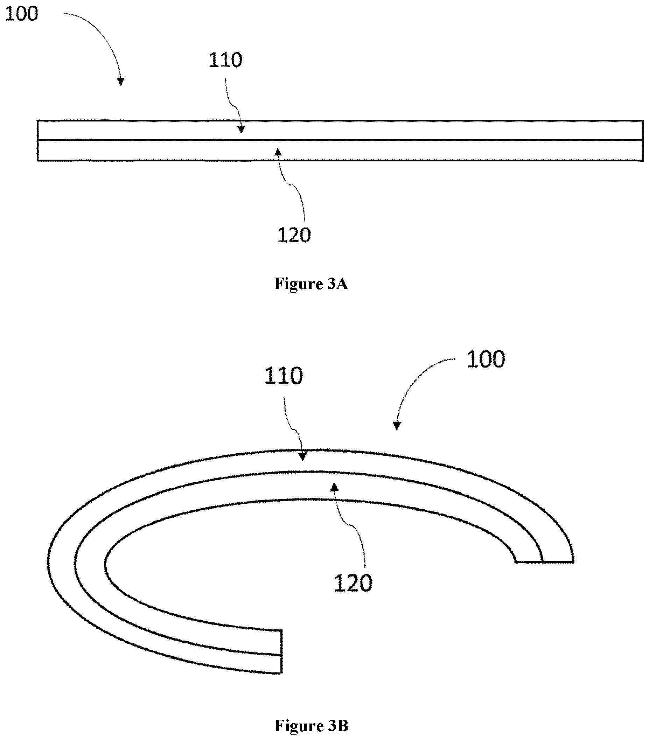

The hygroexpansible material and hygroinert material may be arranged adjacent to one another. As depicted in **Figure 3A and 3B****,** the hygromorphic layer may comprise a hygroinert 120 and a hygroexpansible layer 110, wherein the hygroinert layer 120 comprises the hygroinert material and the hygroexpansible layer 110 comprises the hygroexpansible material. However, the hygroinert material and hygroexpansible material may also present in other geometries. The hygroexpansible material and hygroinert material's geometries may be adjusted to achieve a desired hygromorphic effect, which will be outlined in more detail later within this disclosure. For example, the hygroinert layer may not be a coherent structure but instead a plurality of hygroinert regions connected to the hygroexpansible layer.

Further, the hygroexpansible material and hygroinert material may transfer forces to another, for example by being connected to one another. For example, the hygroexpansible material and the hygroinert material may be connected to one another directly or via an intermediate layer. The hygroexpansible material and the hygroinert material may also be attached to one another by an adhesive. Alternatively or additionally, the hygroexpansible material and the hygroinert material may be encased in a flexible casing, which may also result in the force transfer without a direct connection between the hygroexpansible material and the hygroinert material.

In an example, as shown in **Figure 3A****,** when the water content of the hygroexpansible material and/or hygroexpansible layer 110 is for example 20 wt.-%, relative to the total weight of the hygroexpansible material and/or hygroexpansible layer, the hygromorphic layer 100 may be flat. When the water content is increased, for example when the razor cartridge 20 is rinsed under a stream of water or comes into contact with shaving foam, the hygroexpansible material and thereby the hygroexpansible layer 110 expands. As the hygroexpansible layer is expanding, while the hygroinert layer retains its dimensions, the hygromorphic layer bends towards the hygroinert layer, as depicted in **Figure 3B****.**

The mechanism of the hygromorphic effect may be similar to that of a bimetallic strip, however whereas a bimetallic strip is configured to shape-shift when exhibiting to a change in temperature, the hygromorphic layer 100 is configured to shape-shift when exhibiting a change in water content.

In some embodiments, the hygroexpansible material may be hydrophilic and the hygroinert material may be hydrophobic.

In some embodiments, the one or more shaving blades may have a length, wherein the hygromorphic layer 100 may cover at least part of the length, more specifically at least 80% of the length and in particular all of the length. In some embodiments, the razor cartridge 20 may comprise two hygromorphic layers 100a, 100b, in particular wherein the two hygromorphic layers are disposed opposite one another. Each hygromorphic layer of the two hygromorphic layers may cover part of the length of the one or more shaving blades, in particular wherein each hygromorphic layer of the two hygromorphic layers covers at least 40% of the length, and in particular about 50% of the length, as shown in **Figure 4****.**

The length of the one or more shaving blades may be regarded as the dimension substantially parallel to the leading longitudinal side 24 and/or the trailing longitudinal side 25.

In some embodiments, the hygroinert material may comprise a toner ink, in particular a toner ink comprising an ester of an acrylic ester, iodine-doped reduced graphene oxide, polyimide, partially reduced graphene oxide-polypyrrole, graphite, biaxially oriented polypropylene, SU-8, NOA63, poly(methyl methacrylate) and/or a styrene-acrylate copolymer.

In some embodiments, the hygroexpansible material may comprise pollen paper, reduced graphene oxide, bacillus subtilis spores, CNT-paper, and/or polydopamine-reduced graphene oxide. The term "CNT-paper" refers to carbon-nanotube-paper.

In some embodiments, the hygromorphic layer 100 may comprise a plurality of fibers embedded within a polymeric matrix. The plurality of fibers may be hygroexpansible and the polymeric matrix may be hygroinert. The plurality of fibers may be oriented in a specific direction. By arranging the direction of the plurality of fibers during production, the subsequently obtained shape after water absorption can be controlled.

In some embodiments, the hygroinert layer may be patterned. The term "patterned" within this disclosure may refer to a layer comprises gaps and/or regions of variable layer thickness. For example, the hygromorphic layer may be produced by providing a graphene oxide layer and applying an SU-8 layer to it. SU-8 may be patterned using lithography, as SU-8 cross-links under UV-light. The patterns may influence the shape-shifting occurring when water is absorbed by the hygroexpansible layer, as the mechanical properties of the hygroinert layer vary due to the patterning. For example, gaps or regions of lesser layer thickness in the hygroinert layer may allow for greater deformation. Additionally or alternatively, regions of greater thickness within the hygroinert layer may lead to lesser deformation within these regions.

Further, in particular if the hygroinert layer is disposed adjacent the hygroexpansible layer, the hygroinert layer patterning may influence the swelling of the hygroexpansible layer. For example, a hygroexpansible layer such as hygroexpansible paper, may be patterned with a hygroinert ink on one side and coated with a hygroinert material on the second side, e.g. completely covered with the hygroinert on the second side. As a result, the water may be, at least temporarily, only absorbed by the hygroexpansible layer in regions wherein the hygroexpansible layer is not covered by the hygroinert ink. Due to the different regions of the hygroexpansible layer swelling at different rates, the shape-shifting action may be controlled, more specifically the geometry of the hygromorphic layer after water absorption may be controlled by the patterning.

In some embodiments, as mentioned above, the hygroinert layer may comprise gaps and/or regions of variable thickness, in particular a plurality of gaps and/or regions of variable thickness. In some embodiments, a distance between each of the gaps and/or regions variable layer thickness of the plurality gaps and/or regions variable layer thickness of variable thickness may be between about 20 µm to about 1000 µm. In some embodiments, each of the gaps and/or regions variable layer thickness of the plurality gaps and/or regions variable layer thickness may have a width between about 20 µm to about 1000 µm. In some embodiments, the hygromorphic layer may have a thickness between about 20 µm to about 400 µm. A higher thickness may increase the hygromorphic layer's mechanical stability. A lower thickness may reduce the weight of the razor cartridge 20. In some embodiments, the hygromorphic layer may have a weight between about 10 mg to about 1000 mg.

In some embodiments, the hygromorphic layer 100 may exhibit an increase of the maximum bending curvature of between about 1.00 cm⁻¹ to about 5.0 cm⁻¹, more specifically of between about 2.0 cm⁻¹ to about 4.0 cm⁻¹, and in particular of between about 1.5 cm⁻¹ to about 3.5 cm⁻¹, when a water content within the hygroexpansible material is increased from about 20 wt.-% to about 100 wt.-%. The maximum bending curvature may be achieved within up to 5 minutes, more specifically up to 3 min and in particular within 1 minute of exposure to water. The maximum bending curvature of the hygromorphic material may be the same as the maximum bending curvature of the substrate 100. Methods for determining the maximum bending curvature are known in the art. For example, the maximum bending curvature may be measured by taking images of the substrate 100, in particular a side-view of the substrate 100, at different water contents, in particular 20 wt.-% and 100 wt.-%, relative to the maximum water absorption capacity of the hygroexpansible material. The images may then be digitally analyzed by fitting a circle to the substrate's curvature. The reciprocal of the radius of the smallest circle fitted to the substrate's curvature may then be taken as the maximum bending curvature.

In some embodiments, the hygromorphic layer 100 may exhibit an increase of the maximum bending curvature between from about 0.10 cm⁻¹ to about 3.1 cm⁻¹ when a water content within the hygroexpansible material may be increased from about 20 wt.-% to about 100 wt.-%.

In some embodiments, the hygromorphic layer 100 may have a deformability between about 0.02 /cm*%-relative air humidity to about 0.25 /cm*%-relative air humidity. The deformability may be defined as the maximum bending curvature divided by the relative air humidity at which the maximum bending curvature is achieved.

In some embodiments, as shown in **Figures 4****,** **6 and** 7, the hygromorphic layer 100 may comprise at least one protrusion 130, more specifically between about 2 to about 8 protrusions 130. The at least one protrusion 130 may prevent direct contact between the hygromorphic layer 100 and an edge 150 of the shaving blade. Preventing contact between the hygromorphic layer 100 and the blade edge 150 may prevent the hygromorphic layer 100 being cut by the blade edge 150. Additionally or alternatively, the hygromorphic layer 100 may be moist for an extended duration after shaving. As a result, when in direct contact with the shaving blade, the hygromorphic layer 100 may keep at least parts of the blade moist, which may increase the risk of corrosion of the shaving blades, in particular as shaving blades are commonly manufactured from metals.

In some embodiments, the one or more protrusions 130 may comprise the hygroexpansible and/or hygroinert material; or wherein the one or more protrusions may comprise a second material, more specifically a polymer and in particular silicone.

In some embodiments, the one or more protrusions may have a height between about 50 to about 500 µm and/or a width between about 20 µm to about 100 µm.

In some embodiments, the one or more protrusions may be straight, curved or angled.

In some embodiments, the hygromorphic layer 100 may comprise a first side facing towards the one or more shaving blades and a second side facing away from the one or more shaving blades, wherein the one or more protrusions 130 may be located on the first side.

In some embodiments, the one or more protrusions 130 may be configured to be in contact with the leading longitudinal side 24 and/or trailing longitudinal side 25, when the water content of the hygroexpansible material may be below a threshold water content and not to be in contact with the leading longitudinal side 24 and/or trailing longitudinal side 25, when the water content may be above the threshold water content. Contact with the leading longitudinal side 24 and/or trailing longitudinal side 25 may provide mechanical support to the hygromorphic layer 100 when the razor cartridge 20 is not in use.

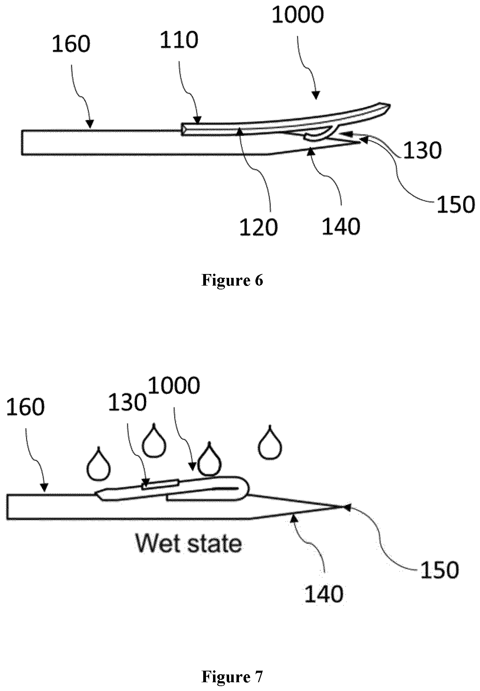

**Figure 6** and **Figure 7** show another embodiment, wherein the hygromorphic layer 1000 may be attached to the one or more shaving blades 160, more specifically wherein one hygromorphic layer 1000 may be attached to each shaving blade 160 of the one or more shaving blades, in particular wherein each hygromorphic layer 1000 may be attached to each shaving blade 160 by an adhesive. The hygromorphic layer 1000 attached to the one or more shaving blades 160 may also protect the shaving blades 160, in particular the blade edge 150 in between shaves from making contact with other objects, or the user's skin. When the user wants shave, the user may wet the hygromorphic layer 1000 and the increasing water content in the hygromorphic layer 100 may lead the hygromorphic layer to bend away from the shaving blade edge 150, in particular in a direction against the shaving direction S, to allow the user to shave.

In some embodiments, the one or more protrusion 130 may be configured to be in contact with an angled portion 140 of the shaving blade 160, when the water content of the hygroexpansible material is below the threshold water content and not to be in contact with the angled portion 140 of the shaving blade 160, when the water content may be above the threshold water content. The angled portion 140 may be the portion of the shaving blade 160 terminating in a shaving blade edge 150 used for cutting hairs.

Further, the hygromorphic layer 1000 and/or the one or more protrusions 130 may act as a skin management element when the water content of the hygroexpansible material is above the threshold water content. For example, the hygromorphic layer 1000 may aid the lubricity of the shaving blade 160, e.g. by incorporating lubricants or slippery materials. Additionally or alternatively, the one or more protrusions 130 may be configured to pull on the user's skin. The one or more protrusions 130 may for example pull tight the user's skin to improve the closeness of the shave and/or reduce the risk of the user accidentally cutting into skin. In an example, the one or more protrusions 130 may be hooked shape. In an example, the one or more protrusions 130 may comprise a material exhibiting a higher tack, compared to the shaving blade 160.

In some embodiments, the threshold water content may be about 50 wt.-%, more specifically about 30 wt.-% and in particular about 20 wt.-%, relative to the total weight of the hygroexpansible material. In some embodiments, the threshold water content may be at least about 20 wt.-%, more specifically at least about 30 wt.-% and in particular at least about 50 wt.- %, relative to the total weight of the hygroexpansible material.

In a second aspect, the present disclosure relates to a method for manufacturing a razor cartridge 20 according to any preceding embodiment, wherein the method comprises providing a razor cartridge blank, in particular a razor cartridge blank comprising one or more shaving blades. The method further comprises attaching the hygromorphic layer 100, 1000 to a razor cartridge housing 21 comprised within the razor cartridge blank or attaching the hygromorphic layer 100, 1000 to one or more shaving blades comprised within the razor cartridge blank.

In a third aspect, the present disclosure relates to a shaving razor assembly 1 comprising a razor handle 2 and a razor cartridge 20 according to any preceding embodiment, wherein the razor cartridge 20 may be either releasably attached to the razor handle 2 via a pivotable or non-pivotable connection, integrally formed with the razor handle 2 via a non-pivotable connection, or integrally formed with the razor handle 2 via a pivotable connection.

In a fourth aspect, which is not part of the claimed invention, the present disclosure relates to a kit of parts comprising a razor handle 2 and a razor cartridge holder comprising a plurality of razor cartridges 20 according to any preceding embodiment.

The scope of protection of the current invention is defined by the appended claims.

## Claims

1. A razor cartridge (20) comprising:
a housing (21) having a leading longitudinal side (24) and a trailing longitudinal side (25);
one or more shaving blades disposed between the leading longitudinal side (24) and the trailing
longitudinal side (25); and **characterised by**:
a hygromorphic layer (100) disposed between the leading longitudinal side (24) and the trailing longitudinal side (25) and adjacent to the one or more shaving blades

2. The razor cartridge according to claim 1, wherein the hygromorphic layer comprises a hygroexpansible material and a hygroinert material.

3. The razor cartridge according to claim 2, wherein the hygroexpansible material is configured to swell and the hygroinert material is configured not to swell.

4. The razor cartridge according to any of claims 2 or 3, wherein the hygroexpansible material is hydrophilic and the hygroinert material is hydrophobic.

5. The razor cartridge according to any preceding claim, wherein the hygromorphic layer comprises a hygroinert layer and a hygroexpansible layer, in particular wherein the hygroinert layer comprises the hygroinert material and the hygroexpansible layer comprises the hygroexpansible material.

6. The razor cartridge according to any preceding claim, wherein the one or more shaving blades have a length, wherein the hygromorphic layer covers at least part of the length, more specifically at least 80% of the length and in particular all of the length.

7. The razor cartridge according to any one of claims 2 to 6, wherein the hygroinert material comprises a toner ink, in particular a toner ink comprising an ester of an acrylic ester, iodine-doped reduced graphene oxide, polyimide, partially reduced graphene oxide-polypyrrole, graphite, biaxially oriented polypropylene, SU-8, NOA63, poly(methyl methacrylate) and/or a styrene-acrylate copolymer.

8. The razor cartridge according to any one of claims 2 to 7, wherein the hygroexpansible material comprises pollen paper, reduced graphene oxide, bacillus subtilis spores, CNT-paper, and/or polydopamine-reduced graphene oxide.

9. The razor cartridge according to any one of claims 5 to 8, wherein the hygroinert layer is patterned, in particular wherein the hygroinert layer comprises a plurality of gaps and/or regions of variable layer thickness.

10. The razor cartridge according to any preceding claim, wherein the hygromorphic layer has a thickness between about 20 µm to about 400 µm.

11. The razor cartridge according to claim 8, wherein the hygromorphic layer is attached to the housing, more specifically wherein a first hygromorphic layer is attached to a first side portion or a first retainer and a second hygromorphic layer is attached to a second side portion or a second retainer.

12. The razor cartridge according to any preceding claim, wherein the hygromorphic layer comprises at least one protrusion, more specifically between about 2 to about 8 protrusions, in particular wherein the one or more protrusions have a height between about 50 to about 500 µm and/or a width between about 20 µm to about 100 µm.

13. The razor cartridge according to any one of claims 1 to 10 or claim 12, wherein the hygromorphic layer is attached to the one or more shaving blades, more specifically wherein one hygromorphic layer is attached to each shaving blade of the one or more shaving blades, in particular wherein each hygromorphic layer is attached to each shaving blade by an adhesive.

14. A method for manufacturing a razor cartridge (20) according to any preceding claim, wherein the method comprises:
- providing a razor cartridge blank, in particular a razor cartridge blank comprising one or more shaving blades;
- attaching the hygromorphic layer (100) to a razor cartridge housing (21) comprised within the razor cartridge blank; or,
- attaching the hygromorphic layer (100) to one or more shaving blades comprised within the razor cartridge blank.

15. A shaving razor assembly comprising:
- a razor handle;
- a razor cartridge according to any one of claims 1 to 13, wherein the razor cartridge is either releasably attached to the razor handle via a pivotable or non-pivotable connection, integrally formed with the razor handle via a non-pivotable connection, or integrally formed with the razor handle via a pivotable connection.

## Patentansprüche

1. Rasiererkartusche (20), umfassend:
ein Gehäuse (21), das eine vordere Längsseite (24) und eine hintere Längsseite (25) aufweist;
ein oder mehrere Rasierklingen, die zwischen der vorderen Längsseite (24) und der hinteren Längsseite (25) angeordnet sind; und **gekennzeichnet durch**:
eine hygromorphe Schicht (100), die zwischen der vorderen Längsseite (24) und der hinteren Längsseite (25) und angrenzend an die eine oder die mehreren Rasierklingen angeordnet ist.

2. Rasiererkartusche nach Anspruch 1, wobei die hygromorphe Schicht ein hygroexpandierbares Material und ein hygroinertes Material umfasst.

3. Rasiererkartusche nach Anspruch 2, wobei das hygroexpandierbare Material konfiguriert ist, um aufzuquellen, und das hygroinertes Material konfiguriert ist, um nicht aufzuquellen.

4. Rasiererkartusche nach einem der Ansprüche 2 oder 3, wobei das hygroexpandierbare Material hydrophil und das hygroinerte Material hydrophob ist.

5. Rasiererkartusche nach einem der vorstehenden Ansprüche, wobei die hygromorphe Schicht eine hygroinerte Schicht und eine hygroexpandierbare Schicht umfasst, wobei insbesondere die hygroinerte Schicht das hygroinerte Material umfasst und die hygroexpandierbare Schicht das hygroexpandierbare Material umfasst.

6. Rasiererkartusche nach einem der vorstehenden Ansprüche, wobei die eine oder die mehreren Rasierklingen eine Länge aufweisen, wobei die hygromorphe Schicht mindestens einen Teil der Länge, bevorzugt mindestens 80 % der Länge und insbesondere die gesamte Länge bedeckt.

7. Rasiererkartusche nach einem der Ansprüche 2 bis 6, wobei das hygroinerte Material eine Tonertinte umfasst, insbesondere eine Tonertinte umfassend einen Ester eines Acrylesters, ioddotiertes reduziertes Graphenoxid, Polyimid, teilweise reduziertes Graphenoxid-Polypyrrol, Graphit, biaxial orientiertes Polypropylen, SU-8, NOA63, Poly(methylmethacrylat) und/oder ein Styrol-Acrylat-Copolymer.

8. Rasiererkartusche nach einem der Ansprüche 2 bis 7, wobei das hygroexpandierbare Material Pollenpapier, reduziertes Graphenoxid, Sporen von Bacillus subtilis, CNT-Papier und/oder polydopaminreduziertes Graphenoxid umfasst.

9. Rasiererkartusche nach einem der Ansprüche 5 bis 8, wobei die hygroinerte Schicht gemustert ist, wobei insbesondere die hygroinerte Schicht eine Vielzahl von Lücken und/oder Bereichen variabler Schichtdicke umfasst.

10. Rasiererkartusche nach einem der vorstehenden Ansprüche, wobei die hygromorphe Schicht eine Dicke zwischen etwa 20 µm bis etwa 400 µm hat.

11. Rasiererkartusche nach Anspruch 8, wobei die hygromorphe Schicht an dem Gehäuse angebracht ist, wobei insbesondere eine erste hygromorphe Schicht an einem ersten Seitenabschnitt oder einem ersten Halter angebracht ist und eine zweite hygromorphe Schicht an einem zweiten Seitenabschnitt oder einem zweiten Halter angebracht ist.

12. Rasiererkartusche nach einem der vorstehenden Ansprüche, wobei die hygromorphe Schicht mindestens einen Vorsprung, insbesondere zwischen etwa 2 bis etwa 8 Vorsprünge, umfasst, wobei insbesondere der eine oder die mehreren Vorsprünge eine Höhe zwischen etwa 50 bis etwa 500 µm und/oder eine Breite zwischen etwa 20 µm bis etwa 100 µm haben.

13. Rasiererkartusche nach einem der Ansprüche 1 bis 10 oder 12, wobei die hygromorphe Schicht an der einen oder den mehreren Rasierklingen angebracht ist, wobei bevorzugt eine hygromorphe Schicht an jeder Rasierklinge der einen oder der mehreren Rasierklingen angebracht ist, wobei besonders bevorzugt jede hygromorphe Schicht durch einen Klebstoff an jeder Rasierklinge angebracht ist.

14. Verfahren zum Herstellen einer Rasiererkartusche (20) nach einem der vorstehenden Ansprüche, wobei das Verfahren umfasst:
- Bereitstellen eines Rasiererkartuschenrohlings, insbesondere eines Rasiererkartuschenrohlings umfassend eine oder mehrere Rasierklingen;
- Anbringen der hygromorphen Schicht (100) an einem Rasiererkartuschengehäuse (21), das innerhalb des Rasiererkartuschenrohlings enthalten ist; oder
- Anbringen der hygromorphen Schicht (100) an einer oder mehreren Rasierklingen, die innerhalb des Rasiererkartuschenrohlings enthalten sind.

15. Rasiereranordnung, umfassend:
- einen Rasierergriff;
- eine Rasiererkartusche nach einem der Ansprüche 1 bis 13, wobei die Rasiererkartusche entweder an dem Rasierergriff über eine schwenkbare oder nicht schwenkbare Verbindung lösbar angebracht ist, mit dem Rasierergriff über eine nicht schwenkbare Verbindung einstückig ausgebildet ist, oder mit dem Rasierergriff über eine schwenkbare Verbindung einstückig ausgebildet ist.

## Revendications

1. Cartouche de rasoir (20) comprenant :
un boîtier (21) possédant un côté longitudinal avant (24) et un côté longitudinal arrière (25) ;
une ou plusieurs lames de rasage disposées entre le côté longitudinal avant (24) et le côté longitudinal arrière (25) ; et **caractérisée par**:
une couche hygromorphe (100) disposée entre le côté longitudinal avant (24) et le côté longitudinal arrière (25) et adjacente à la ou aux lames de rasage.

2. Cartouche de rasoir selon la revendication 1, dans laquelle la couche hygromorphe comprend un matériau hygroexpansible et un matériau hygroinerte.

3. Cartouche de rasoir selon la revendication 2, dans laquelle le matériau hygroexpansible est conçu pour gonfler et le matériau hygroinerte est conçu pour ne pas gonfler.

4. Cartouche de rasoir selon l'une quelconque des revendications 2 ou 3, dans laquelle le matériau hygroexpansible est hydrophile et le matériau hygroinerte est hydrophobe.

5. Cartouche de rasoir selon l'une quelconque revendication précédente, dans laquelle la couche hygromorphe comprend une couche hygroinerte et une couche hygroexpansible, en particulier dans laquelle la couche hygroinerte comprend le matériau hygroinerte et la couche hygroexpansible comprend le matériau hygroexpansible.

6. Cartouche de rasoir selon l'une quelconque revendication précédente, dans laquelle la ou les lames de rasage ont une longueur, la couche hygromorphe couvrant au moins une partie de la longueur, plus spécifiquement au moins 80 % de la longueur et en particulier la totalité de la longueur.

7. Cartouche de rasoir selon l'une quelconque des revendications 2 à 6, dans laquelle le matériau hygroinerte comprend une encre de toner, en particulier une encre de toner comprenant un ester d'un ester acrylique, de l'oxyde de graphène réduit dopé à l'iode, du polyimide, du polypyrrole-oxyde de graphène partiellement réduit, du graphite, du polypropylène orienté biaxialement, du SU-8, du NOA63, du poly(méthacrylate de méthyle) et/ou un copolymère styrène-acrylate.

8. Cartouche de rasoir selon l'une quelconque des revendications 2 à 7, dans laquelle le matériau hygroexpansible comprend du papier de pollen, de l'oxyde de graphène réduit, des spores de *Bacillus subtilis,* du papier CNT et/ou de la polydopamine-oxyde de graphène réduit.

9. Cartouche de rasoir selon l'une quelconque des revendications 5 à 8, dans laquelle la couche hygroinerte est structurée, en particulier dans laquelle la couche hygroinerte comprend une pluralité d'espaces et/ou de régions d'épaisseur de couche variable.

10. Cartouche de rasoir selon l'une quelconque revendication précédente, dans laquelle la couche hygromorphe a une épaisseur comprise entre environ 20 µm jusqu'à environ 400 µm.

11. Cartouche de rasoir selon la revendication 8, dans laquelle la couche hygromorphe est fixée au boîtier, plus précisément dans laquelle une première couche hygromorphe est fixée à une première partie latérale ou à un premier dispositif de retenue et une deuxième couche hygromorphe est fixée à une deuxième partie latérale ou à un deuxième dispositif de retenue.

12. Cartouche de rasoir selon l'une quelconque revendication précédente, dans laquelle la couche hygromorphe comprend au moins une protubérance, plus précisément entre environ 2 jusqu'à environ 8 protubérances, en particulier dans laquelle la ou les protubérances ont une hauteur comprise entre environ 50 jusqu'à environ 500 µm et/ou une largeur comprise entre environ 20 µm jusqu'à environ 100 µm.

13. Cartouche de rasoir selon l'une quelconque des revendications 1 à 10 ou la revendication 12, dans laquelle la couche hygromorphe est fixée à la ou aux lames de rasage, plus précisément dans laquelle une couche hygromorphe est fixée à chaque lame de rasage parmi la ou les lames de rasage, en particulier dans laquelle chaque couche hygromorphe est fixée à chaque lame de rasage par un adhésif.

14. Procédé de fabrication d'une cartouche de rasoir (20) selon l'une quelconque revendication précédente, le procédé comprenant :
- la fourniture d'une ébauche de cartouche de rasoir, en particulier une ébauche de cartouche de rasoir comprenant une ou plusieurs lames de rasage ;
- la fixation de la couche hygromorphe (100) à un boîtier de cartouche de rasoir (21) compris dans l'ébauche de cartouche de rasoir ; ou,
- la fixation de la couche hygromorphe (100) à une ou plusieurs lames de rasage contenues dans l'ébauche de cartouche de rasoir.

15. Ensemble rasoir de rasage comprenant :
- un manche de rasoir ;
- une cartouche de rasoir selon l'une quelconque des revendications 1 à 13, dans lequel la cartouche de rasoir est soit fixée de manière amovible au manche de rasoir par l'intermédiaire d'une liaison pivotante ou non pivotante, soit formée d'un seul tenant avec le manche de rasoir par l'intermédiaire d'une liaison non pivotante, soit formée d'un seul tenant avec le manche de rasoir par l'intermédiaire d'une liaison pivotante.
